# EUROPÄISCHE PATENTSCHRIFT

(11) **EP 2 090 613 B1**
(45) Veröffentlichungstag und Bekanntmachung des Hinweises auf die Patenterteilung: **12.06.2013**
(21) Anmeldenummer: 09150819.2
(22) Anmeldetag: 19.01.2009
(51) Int. Cl.: C08K 3/34, C08L 21/00, B60C 1/00

(54) **Kautschukmischung mit verbessertem Steifigkeitsverhalten**
Rubber composition with improved rigidity
Mélange de caoutchouc ayant un comportement en rigidité amélioré

(30) Priorität: 15.02.2008 DE 102008009326
(43) Veröffentlichungstag der Anmeldung: 19.08.2009
(73) Patentinhaber: Continental Reifen Deutschland GmbH, 30165 Hannover (DE)
(72) Erfinder: Weinreich, Hajo, 31840 Hessisch-Oldendorf (DE); Stollberg, Sandra, 31553 Auhagen (DE)
(74) Vertreter: Finger, Karsten

(56) Entgegenhaltungen:
- EP-A1- 0 586 727
- EP-A1- 1 063 259
- EP-A1- 1 418 199
- US-A- 4 598 105

## Beschreibung

Die Erfindung betrifft eine Kautschukmischung, insbesondere für Fahrzeugreifen, Riemen und Gurte.

Zur Beeinflussung der Mischungs- und Vulkanisateigenschaften werden der Kautschukmischung unterschiedlichste Zuschlagstoffe beigemischt und/oder es werden spezielle Polymere verwendet. Als Zuschlagstoffe seien beispielhaft an dieser Stelle Füllstoffe, z. B. Ruß, Kieselsäure und weitere, Weichmacher, Alterungsschutzmittel und Vernetzungssysteme aus Schwefel, Beschleuniger und Aktivator genannt. Wird durch Variation der Mischung eine Eigenschaft verbessert, geht dies aber häufig mit einer Verschlechterung einer anderen Eigenschaft einher, so dass gewisse Zielkonflikte vorliegen. Bei Mischungen für Laufstreifen von Fahrzeugreifen bestehen solche Zielkonflikte beispielsweise im Hinblick auf die thermische Erweichung, der Steifigkeit und der Bruchdehnung.

Es ist beispielsweise bekannt, zur Erhöhung der Steifigkeit der Vulkanisate eines gegebenen Mischungssystems, gemessen über den Spannungswert bei Dehnung, den Füllgrad, d.h. den Anteil an Füllstoff in der Mischung, zu erhöhen, einen Füllstoff mit aktiver Oberfläche zu verwenden, die Vemetzungsdichte zu erhöhen oder ein spezielles Polymersystem zu verwenden. Die vorgenannten Maßnahmen führen dabei aber zwangsläufig zu einer Verschlechterung der Dehnungseigenschaften der Vulkanisate.

Die Verwendung weiterer Füllstoffe, als die üblicherweise eingesetzten Füllstoffe Ruß und / oder Kieselsäure, ist in der Kautschukindustrie vor allem aus Kostengründen seit langem bekannt. Insbesondere für die Herstellung von technischen Gummiartikeln, die hohe Anforderungen an die Gasdichtigkeit haben, wie z.B. für Tennisbälle, aber auch für die Kautschukmischung der Innenseele, auch als Innerliner bezeichnet, eines Fahrzeugluftreifens ist die Verwendung von Talk als zusätzlicher Füllstoff oder als Ersatz insbesondere für Kieselsäure bekannt. Die weiteren physikalischen Eigenschaften des jeweiligen Gummiartikels oder der jeweiligen Kautschukmischung, wie beispielsweise Bruchdehnung, Wärmeaufbau und Steifigkeit, stehen hierbei nicht im Focus und werden meist vernachlässigt.

Zum Stand der Technik sind nun folgende Druckschriften zu würdigen:
(D1) DE 100 59 236 B4
(D2) US 6,037,025
(D3) US 4,598,105
(D4) JP 61143455 A
(D5) GB 1 284 203
(D6) DE 10 2005 004 031 A1

In D1 wird eine schwefelvulkanisierbare Kautschukmischung insbesondere für Reifenlaufstreifen von Rennreifen beschrieben. Die Kautschukmischung enthält neben Ruß 5 - 90 phr zumindest eines Schichtsilikates, welches mit Alkylammoniumionen modifiziert ist. Dadurch soll eine hohe Rutschfestigkeit (hoher Reibungskoeffizient, guter Grip) und eine Härteabnahme bei erhöhten Temperaturen erreicht werden.

Aus D2 ist ein Schlauch bekannt, dessen Innenschicht Nitrilkautschuk enthält und der eine besonders gute Beständigkeit gegen hohe Temperaturen und verschiedene Öle aufweist, wie es vor allem im Automobilinnenbereich gefordert wird.
Dazu wird der Kautschukmischung für die Innenschicht 5 - 25 phr Talk zugemischt.

D3 beschreibt eine Kautschukmischung enthaltend Ruß und ein quartemäres Ammoniumsalz als Kupplungsangenz, der zur verbesserten Dispergierung noch ein zweiter Füllstoff hinzugefügt wird. Der zweite Füllstoff kann hierbei ausgewählt sein aus der Gruppe, bestehend aus Kaolin, Metakaolin, Talk, Pyrophyllit Kohle, Koks, Graphit oder Metallkarbonate.

Eine Kautschukzusammensetzung mit hoher Gasdichtigkeit ist aus D4 bekannt. Die Kautschukzusammensetzung enthält flockige oder plättchenartige Füllstoffe, wie z.B. Sericit, Kaolin Chlorit, Alumosilikate) und findet insbesondere für Tennisbälle Verwendung.

In D5 wird eine Kautschukmischung auf der Basis von Silikonkautschuk beschrieben, die bei Raumtemperatur vulkanisierbar ist und eine verbesserte Haftung auf Metall besitzt. Die Kautschukmischung enthält hierbei zumindest einen Titan-Katalysator, zumindest ein Polydiorganosiloxan, zumindest ein Alkoxysilan und 0,5 bis 35 phr Talk.

D6 offenbart eine Kautschukmischung insbesondere für einen Innerliner, die 40 - 100 phr Halobutylkautschuk, 5 - 70 phr delaminierten Talk und 10 - 100 phr Ruß enthält. Die Kautschukmischung weist eine deutlich verbesserte Luftdichtigkeit und eine verbesserte Riss- und Ermüdungsbeständigkeit auf.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Der vorliegenden Erfindung liegt nun die Aufgabe zu Grunde, eine Kautschukmischung, insbesondere für Fahrzeugreifen, Riemen und Gurte, bereitzustellen, welche die Zielkonflikte Bruchdehnungsverhalten und Steifigkeitsverhalten bzw. Wärmeaufbau und Steifigkeitsverhalten löst oder zumindest entschärft.

Gelöst wird die Aufgabe dadurch, dass die Kautschukmischung der eingangs genannten Art zumindest durch folgende Zusammensetzung gekennzeichnet ist:
- zumindest einen Dienkautschuk und
- 0 - 120 phr amorphe Kieselsäure und / oder Fällungskieselsäure und
- 0.1 - 120 phr zumindest eines Rußes und
- 5 - 50 phr eines Füllstoffgemisches aus Talk und Chlorit und
- 0 - 10 phr zumindest eines Harzes und
- 2 - 200 phr weitere Zusatzstoffe.

Überraschenderweise wurde gefunden, dass sich durch eine Kombination von Talk und Chlorit als weitere Füllstoffe eine Verbesserung der Bruchdehnung bei gleichzeitiger Erhöhung der statischen und dynamischen Steifigkeit und eine Verringerung der Wärmeentwicklung insbesondere unter dynamischer Belastung zu beobachten ist. Vorteilhafterweise verstärken sich diese Effekte noch bei gleichzeitiger Anpassung des Vernetzungssystems.

Was unter Talk und Chlorit zu verstehen ist, ist dem Fachmann geläufig und muss hier nicht näher erläutert werden. Hier sei auf S. Matthes, Mineralogie, Springer Verlag, 3. Auflage (1990), Talk siehe S. 131ff und Chlorit siehe S. 134ff und auf H. J. Rösler, Lehrbuch der Mineralogie, Dt. Verlag für Grundstoffindustrie, 5. Auflage (1991), Talk siehe S. 577ff und Chlorit siehe S. 588ff verwiesen. Dort sind die mineralogischen und kristallographischen Eigenschaften, wie. z.B. Farbe, Mohs-Härte, Kristallstruktur und weitere, ausreichend beschrieben.

Danach wird unter Talk eine Zusammensetzung der mineralogischen Formel Mg₃ [(OH)₂/Si₄O₁₀] und unter Chlorit eine Zusammensetzung der mineralogischen Formel (Mg, Fe)₃^{[6]}[(OH)₂/(Si,Al)₄O₁₀]·(Mg,Fe,Al)₃(OH)₆ verstanden. Es können grundsätzlich alle dem Fachmann geläufigen und am Markt erhältlichen Talk- und Chloritvarietäten verwendet werden.

Der Ausdruck "Talk" soll hier vereinfachend auch talkhaltige Komponenten umfassen. Der Ausdruck "Chlorit" soll entsprechend auch chlorithaltige Komponenten umfassen. Der Begriff "talkhaltige Komponente" bzw. "chlorithaltige Komponente" soll zum Ausdruck bringen, dass in der erfindungsgemäßen Zusammensetzung auch Komponenten eingesetzt werden können, die neben Talk bzw. Chlorit noch weitere Bestandteile enthalten. Bspw. enthalten viele kommerziell erhältliche Talk- bzw. Chlorit- Handelsprodukte neben Talk noch unterschiedliche Mengen an Begleitmineralien. Zudem sind auch Abmischungen von Talk bzw. Chlorit mit anderen Bestandteilen, wie beispielsweise anderen mineralischen Bestandteilen, insbesondere Silikaten, wie z.B. Dolomit und / oder Quarz und / oder Schichtsilikaten, denkbar.

Die Kautschukmischung enthält zumindest einen Dienkautschuk. Bevorzugt enthält sie 5 - 80 phr, besonders bevorzugt 20 - 75 phr, zumindest eines natürlichen oder synthetischen Polyisoprens und / oder bevorzugt 5 - 60 phr, besonders bevorzugt 5 - 40 phr, zumindest eines Butadienkautschuks und / oder bevorzugt 5 - 50 phr, besonders bevorzugt 5 - 30 phr, zumindest eines Styrolbutadienkautschuks.
Der Styrolbutadienkautschuk kann ein lösungspolymerisierter Styrolbutadienkautschuk (SSBR) oder ein emulsionspolymerisierter Styrolbutadienkautschuk (ESBR) sein. Es können in der Kautschukmischung aber auch beide Typen vorhanden sein.

Der oder die verwendeten oben genannten Dienkautschuk oder Dienkautschuke kann oder können hierbei mit primären oder sekundären Aminogruppen und / oder Alkoxysilylgruppen und / oder OH-Gruppen und / oder Epoxidgruppen und / oder Carboxylgruppen und / oder Mercaptogruppen und / oder weiteren, dem Fachmann bekannten, Gruppen modifiziert sein.

Des Weiteren kann die Kautschukmischung 0 - 50 phr, insbesondere 0,1 - 50 phr, insbesondere wiederum wenigstens 0,5 - 50 phr, zumindest eines weiteren polaren oder unpolaren Kautschuks enthalten.
Der polare oder unpolare Kautschuk ist herbei ausgewählt aus der Gruppe, bestehend aus Flüssigkautschuken und / oder Halobutylkautschuk und / oder Polynorbornen und / oder Isopren-Isobutylen-Copolymer und / oder Ethylen-Propylen-Dien-Kautschuk und / oder Nitrilkautschuk und / oder Chloroprenkautschuk und / oder Acrylat-Kautschuk und / oder Fluorkautschuk und / oder Silikon-Kautschuk und / oder Polysulfidkautschuk und / oder Epichlorhydrinkautschuk und / oder Styrol-Isopren-Butadien-Terpolymer. Insbesondere zur Herstellung technischer Gummiartikel, abweichend von Fahrzeugreifen, werden diese Kautschuke Verwendung finden.

Zumindest ein verwendeter Kautschuk kann funktionalisiert sein. Es handelt sich um eine Funktionalisierung mit Hydroxylgruppen und / oder Epoxygruppen und / oder Siloxangruppen und / oder Aminogruppen und / oder Aminosiloxangruppen und / oder weitere dem Fachmann bekannte funktionellen Gruppen.

Der Kautschuk kann auch nicht funktionalisiert sein, so dass in der Kautschukmischung entweder alle Kautschuke, ein Teil der Kautschuke oder kein Kautschuk funktionalisiert sind bzw. ist.

In der Kautschukmischung ist amorphe und / oder Fällungskieselsäure in Mengen von 0 - 120 phr, bevorzugt in Mengen von 0 - 100 phr, wenigstens allerdings in Mengen von 0,1 phr, insbesondere wenigstens in Mengen von 0,5 phr, enthalten. Es können alle dem Fachmann bekannten Kieselsäuren verwendet werden, wobei es besonders vorteilhaft ist, wenn amorphe und / oder Fällungskieselsäure mit einer BET-Oberfläche von größer oder gleich 100 m² / g eingesetzt wird.
Die BET-Oberfläche ist die Stickstoff-Oberfläche gemäß DIN 66131 und DIN 66132 und dient der Charakterisierung vor allem der hellen Füllstoffe.

Des Weiteren enthält die Kautschukmischung bei Vorhandensein von amorpher und / oder Fällungskieselsäure ein Kupplungsagenz in Mengen von 0,1 - 3 phr, bevorzugt 0,5 - 2 phr. Das Kupplungsagenz dient zur Verbesserung der Verarbeitbarkeit und zur Anbindung der Kieselsäure und anderer ggf. vorhandener polarer Füllstoffe an die Polymermatrix und reagiert mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Kupplungsagenz findet bevorzugt Silan Verwendung und es können dabei alle dem Fachmann bekannten Silan-Kupplungsagenzien verwendet werden.

Die Kautschukmischung enthält als dunklen Füllstoff 0,1 - 120 phr, bevorzugt 1 - 120 phr, besonders bevorzugt 5 - 100 phr, zumindest eines Rußes. Vorteilhaft ist es, wenn der Ruß eine DBP-Zahl größer oder gleich 55 cm³ / 100g besitzt. Die DBP-Zahl gemäß ASTM D 2414 bestimmt das spezifische Absorptionsvolumen eines Rußes oder eines hellen Füllstoffes mittels Dibutylphthalat.

Erfindungswesentlich ist, dass die Kautschukmischung 5 - 50 phr, bevorzugt 10 - 30 phr, eines Füllstoffgemisches aus Talk und Chlorit enthält. Dieses Füllstoffgemisch setzt sich aus 40 - 60 Gew. -%, bevorzugt aus 45 - 55 Gew. -%, besonders bevorzugt aus 50 Gew. -%, Talk und 40 - 60 Gew. -%, bevorzugt aus 45 - 55 Gew. -%, besonders bevorzugt aus 50 Gew. -%, Chlorit zusammen. Diese Angaben sind immer auf die Gesamtmenge an Talk und Chlorit im Füllstoffgemisch normiert, da, wie bereits obig beschrieben, unter Umständen in dem Gemisch noch geringe Anteile weiterer, zumeist natürlich vorkommender, Minerale, besonders Silikate, enthalten sein können.
In einer besonders bevorzugten Ausführungsform hat der Talk und / oder der Chlorit einen durchschnittlichen Teilchendurchmesser von 5,2 µm.

Die Kautschukmischung enthält weiterhin 0 - 10 phr, wenigstens aber 0,1 phr, zumindest eines Harzes. Es können dabei alle in der Kautschukindustrie üblicherweise zum Einsatz kommenden Harze verwendet werden.

Weitere Zusatzstoffe beinhaltet im Wesentlichen das Vernetzungssystem (Vernetzer, Beschleuniger und Verzögerer), Ozonschutzmittel, Alterungsschutzmittel, Mastikationshilfsmittel und Aktivatoren.
Der Mengenanteil der Gesamtmenge an weiteren Zusatzstoffen beträgt 2 bis 200 phr, bevorzugt 2 bis 150 phr, besonders bevorzugt 5 bis 100 phr.

Die erfindungsgemäße Kautschukmischung enthält weiterhin 2- 10 phr, bevorzugt 4 - 8 phr, zumindest eines Weichmacheröls, wobei das Weichmacheröl bevorzugt ein Mineralöl ist, das ausgewählt ist aus der Gruppe, bestehend aus DAE (Destillated Aromatic Extracts) und / oder RAE (Residual Aromatic Extract) und / oder TDAE (Treated Destillated Aromatic Extracts) und / oder MES (Mild Extracted Solvents) und / oder naphtenische Öle. Es können in der Kautschukmischung noch 0 - 5 phr zumindest eines weiteren zusätzlichen Weichmachers vorhanden sein. Dieser weitere Weichmacher kann ein synthetischer Weichmacher und / oder eine Fettsäure und / oder ein Fettsäurederivat und / oder ein Harz und / oder ein Faktis sein.

Die Vulkanisation der Kautschukfertigmischung wird in Anwesenheit von Schwefel oder Schwefelspendern durchgeführt, wobei einige Schwefelspender zugleich als Vulkanisationsbeschleuniger wirken können. Schwefelspender oder insbesondere elementarer Schwefel werden im letzten Mischungsschritt in den vom Fachmann gebräuchlichen Mengen von 0.2 bis 8 phr der Kautschukmischung zugesetzt.

Die mit den beschriebenen Verfahren hergestellte Kautschukmischung findet zur Herstellung eines Reifens Verwendung. Dies kann ein Vollgummireifen, aber auch ein Fahrzeugluftreifen sein. Besonderer Einsatzschwerpunkt ist hier die Verwendung im Laufstreifen eines Fahrzeugluftreifens und in einer Body-Mischung eines Fahrzeugluftreifens. Der Begriff Body-Mischung beinhaltet hierbei Seitenwand, Innenseele, Apex, Gürtel, Schulter, Gürtelprofil, Squeege, Karkasse, Wulstverstärker und / oder Bandage.

Weitere Anwendung findet die erfindungsgemäße Kautschukmischung in der Mischungsentwicklung für Riemen und Gurte, insbesondere für Fördergurte.
Im täglichen Einsatz unterliegt insbesondere die Laufseite von Fördergurten starken mechanischen Beanspruchungen, z. B. bei Umlenkung an Antriebs-, Umlenk- und / oder Knicktrommeln und Aushalten der auftretenden Zugkräfte. Daher sind die Bruchdehnung und die statische und dynamische Steifigkeit, sowie der Wärmeaufbau, letzteres besonders beim Transport von temperatursensitivem Material, von großer Bedeutung. Wobei die Bruchdehnungseigenschaft in Kombination mit dem statischen und dynamischen Steifigkeitsverhalten bei Riemen, wie sie z. B. im Automobilbau im Fahrzeug verwendet werden, ein wesentliches Qualitätsmerkmal sind.

Die Herstellung der erfindungsgemäßen Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z.B. durch einen Extrusionsvorgang weiterverarbeitet und in die entsprechende Form gebracht. Zur Verwendung in Fahrzeugreifen wird die Mischung bevorzugt in die Form eines Laufstreifens gebracht und bei der Herstellung des Fahrzeugreifenrohlings wie bekannt aufgebracht. Der Laufstreifen kann aber auch in Form eines schmalen Kautschukmischungsstreifens auf einen Reifenrohling aufgewickelt werden. Es ist bei den Reifen unerheblich, ob der gesamte Laufstreifen aus einer einzigen Mischung hergestellt worden ist oder z. B. einen Cap- und Base-Aufbau aufweist, denn wichtig ist, dass zumindest die mit der Fahrbahn in Berührung kommende Fläche aus der erfindungsgemäßen Kautschukmischung hergestellt worden ist.

Die Erfindung soll nun anhand von Vergleichs- und Ausführungsbeispielen, die in der Tabelle 1 zusammengefasst sind, näher erläutert werden.

Bei sämtlichen in der Tabelle 1 enthaltenen Mischungsbeispielen sind die angegebenen Mengenangaben Gewichtsteile, die auf 100 Gewichtsteile des festen Gesamtkautschuks bezogen sind. Die Vergleichsmischungen sind mit V1 bzw. V2 gekennzeichnet, die erfindungsgemäßen Mischungen sind mit E1 bzw. E2 gekennzeichnet. Die Mischung V1 stellt die Basismischung dar, in V2 wurde das Vernetzungssystem angepasst. Die Mischungen E1 bzw. E2 stellen dann jeweils das zusätzliche Hinzufügen eines Füllstoffgemisches aus Talk und Chlorit zu V1 bzw. V2 dar.

Die Mischungsherstellung erfolgte unter üblichen Bedingungen in zwei Stufen in einem Labortangentialmischer. Aus sämtlichen Mischungen wurden Prüfkörper durch Vulkanisation hergestellt und mit diesen Prüfkörpern für die Kautschukindustrie typische Materialeigenschaften bestimmt, die im unteren Teil der Tabelle 1 dargestellt ist. Für die Tests an Prüfkörpern wurden folgende Testverfahren angewandt:
- Spannungswerte bei 100% statischer Dehnung bei Raumtemperatur (RT) gemäß DIN 53 504
- Reißdehnung bei Raumtemperatur (RT) gemäß DIN 53 504
- Temperaturentwicklung unter dynamischer Beanspruchung, gemessen an einer Kugel mit 60 mm Durchmesser in einer prismatischen Kugellaufrinne mit angetriebener Belastungsscheibe und einer Belastungsfrequenz von 5,6 Hz und einer Laufdauer von 50000 Umdrehungen. Der angegebene Wert [°C] entspricht der Differenz der Temperatur im Kugelinneren nach Beendigung der Prüfung zur Raumtemperatur.

Aus Tabelle 1 wird deutlich, dass zunächst die Verwendung eines Füllstoffgemisches aus Talk und Chlorit eine deutliche Verbesserung hinsichtlich der geforderten Eigenschaften bringt, siehe E1 im Vergleich zu V1. Der Spannungswert, der die Steifigkeit der Kautschukmischung darstellt, wird höher, d.h. das Steifigkeitsverhalten verbessert sich. Die Werte für die Bruchdehnung und die Temperaturentwicklung werden kleiner, d.h. das Bruchdehnungsverhalten und der Wärmeaufbau in der Mischung werden optimiert. Eine Verstärkung der oben genannten Effekte tritt ein, wenn das Vernetzungssystem zusätzlich angepasst wird, siehe Vergleich E2 zu V2. Zunächst erscheint in E2 das Bruchdehnungsverhalten auf einem geringen Niveau im Vergleich zu V2 schlechter zu werden, gleichzeitig verbessert sich allerdings das Steifigkeitsverhalten und vor allem der Wärmeaufbau sehr deutlich.

**Tabelle 1**

| **Bestandteile** | **Einheit** | **V1** | **E1** | **V2** | **E2** |
|---|---|---|---|---|---|
| NR^{a} | phr | 60 | 60 | 60 | 60 |
| BR^{b} | phr | 30 | 30 | 30 | 30 |
| SBR^{c} | phr | 10 | 10 | 10 | 10 |
| Ruß^{d} | phr | 60 | 60 | 60 | 60 |
| Weichmacher^{e} | phr | 8 | 8 | 8 | 8 |
| Harz^{f} | phr | 6 | 6 | 6 | 6 |
| Talk / Chlorit^{g} | phr | - | 20 | - | 20 |
| Stearinsäure | phr | 3 | 3 | 3 | 3 |
| ZnO | phr | 3 | 3 | 3 | 3 |
| Ozon- und Alterungs- | phr | 3 | 3 | 3 | 3 |
| schutzmittel | | | | | |
| Beschleuniger^{h} | phr | 3 | 3 | 3,5 | 3,5 |
| Schwefel | phr | 2,4 | 2,4 | 3 | 3 |

| **Eigenschaften** | | | | | |
|---|---|---|---|---|---|
| Spannungswert 100% | MPa | 4,8 | 5,0 | 5,3 | 6.01 |
| Reißdehnung bei RT | % | 264 | 233 | 199 | 209 |
| Temperaturentwicklung | °C | 85,5 | 84,9 | 70,8 | 66,8 |

| | | | | | |
|---|---|---|---|---|---|
| ^{a} TSR, Fa. Dow Chemicals ^{b} BUNA CB25, Fa. Lanxess ^{c} EUROPRENE 1500, Fa. Polimeri ^{d} N339 ^{e} Mineralöl, RAE ^{f} Kolophonium, Fa. Sumitomo Bakelite Europe ^{g} 50 Gew.- % Talk und 50 Gew. -% Chlorit, 10M2, Fa. Luzanec ^{h} TBBS | | | | | |

## Patentansprüche

1. Kautschukmischung, **gekennzeichnet durch** folgende Zusammensetzung:
- zumindest einen Dienkautschuk und
- 0 - 120 phr amorphe Kieselsäure und / oder Fällungskieselsäure und
- 0,1 - 120 phr zumindest eines Rußes und
- 5 - 50 phr eines Füllstoffgemisches aus Talk und Chlorit und
- 0 - 10 phr zumindest eines Harzes und
- 2 - 200 phr weitere Zusatzstoffe.

2. Kautschukmischung nach Anspruch 1, **dadurch gekennzeichnet, dass** sie 5 - 80 phr zumindest eines natürlichen oder synthetischen Polyisoprens enthält.

3. Kautschukmischung nach einem der Ansprüche 1 bis 2, **dadurch gekennzeichnet, dass** sie 5 - 60 phr zumindest eines Butadienkautschuks enthält.

4. Kautschukmischung nach einem der Ansprüche 1 bis 3, **dadurch gekennzeichnet, dass** sie 5 - 50 phr zumindest eines Styrolbutadienkautschuks enthält.

5. Kautschukmischung nach einem der Ansprüche 1 bis 4, **dadurch gekennzeichnet, dass** sie wenigstens 0,1 phr, insbesondere wenigstens 0,5 phr, amorphe Kieselsäure und / oder Fällungskieselsäure enthält.

6. Kautschukmischung nach einem der Ansprüche 1 bis 5, **dadurch gekennzeichnet, dass** die Menge des Rußes 1- 120 phr beträgt.

7. Kautschukmischung nach einem der Ansprüche 1 bis 6, **dadurch gekennzeichnet, dass** sie 10 - 30 phr eines Füllstoffgemisches aus Talk und Chlorit enthält.

8. Kautschukmischung nach einem der Ansprüche 1 bis 7, **dadurch gekennzeichnet, dass** sich das Füllstoffgemisch aus Talk und Chlorit aus 40 - 60 Gew. -% Talk und 40 - 60 Gew. -% Chlorit zusammensetzt.

9. Kautschukmischung nach Anspruch 8, **dadurch gekennzeichnet, dass** sich das Füllstoffgemisch aus Talk und Chlorit aus 45 - 55 Gew. % Talk und 45 - 55 Gew. - % Chlorit zusammensetzt.

10. Kautschukmischung nach Anspruch 9, **dadurch gekennzeichnet, dass** sich das Füllstoffgemisch aus Talk und Chlorit aus 50 Gew. -% Talk und 50 Gew. -% Chlorit zusammensetzt.

11. Kautschukmischung nach einem der Ansprüche 1 bis 10, **dadurch gekennzeichnet, dass** der durchschnittliche Teilchendurchmesser des Talks und / oder des Chlorits 5,2 µm beträgt.

12. Kautschukmischung nach einem der Ansprüche 1 bis 11, **dadurch gekennzeichnet, dass** sie wenigstens 0,1 phr zumindest eines Harzes enthält.

13. Kautschukmischung nach einem der Ansprüche 1 bis 12, **dadurch gekennzeichnet, dass** der Mengenanteil an weiteren Zusatzstoffen, 2 - 150 phr beträgt

14. Verwendung einer Kautschukmischung nach einem der Ansprüche 1 bis 13 zur Herstellung eines Reifens.

15. Verwendung einer Kautschukmischung nach Anspruch 14 zur Herstellung des Laufstreifens oder einer Body-Mischung eines Reifens.

16. Verwendung einer Kautschukmischung nach einem der Ansprüche 1 bis 13 zur Herstellung eines Gurtes, insbesondere eines Fördergurtes, wiederum insbesondere dessen Laufseite, und / oder eines Riemens, insbesondere eines Flachriemens, Keilriemens, Keilrippenriemens oder Zahnriemens.

## Claims

1. Rubber mixture, **characterized by** the following constitution:
- at least one diene rubber and
- from 0 to 120 phr of amorphous silica and/or precipitated silica and
- from 0.1 to 120 phr of at least one carbon black and
- from 5 to 50 phr of a filler mixture of talc and chlorite and
- from 0 to 10 phr of at least one resin and
- from 2 to 200 phr of other additives.

2. Rubber mixture according to Claim 1, **characterized in that** it comprises from 5 to 80 phr of at least one natural or synthetic polyisoprene.

3. Rubber mixture according to Claim 1 or 2, **characterized in that** it comprises from 5 to 60 phr of at least one butadiene rubber.

4. Rubber mixture according to any of Claims 1 to 3, **characterized in that** it comprises from 5 to 50 phr of at least one styrene-butadiene rubber.

5. Rubber mixture according to any of Claims 1 to 4, **characterized in that** it comprises at least 0.1 phr, in particular at least 0.5 phr, of amorphous silica and/or precipitated silica.

6. Rubber mixture according to any of Claims 1 to 5, **characterized in that** the amount of the carbon black is from 1 to 120 phr.

7. Rubber mixture according to any of Claims 1 to 6, **characterized in that** it comprises from 10 to 30 phr of a filler mixture of talc and chlorite.

8. Rubber mixture according to any of Claims 1 to 7, **characterized in that** the filler mixture of talc and chlorite is composed of from 40 to 60% by weight of talc and from 40 to 60% by weight of chlorite.

9. Rubber mixture according to Claim 8, **characterized in that** the filler mixture of talc and chlorite is composed of from 45 to 55% by weight of talc and from 45 to 55% by weight of chlorite.

10. Rubber mixture according to Claim 9, **characterized in that** the filler mixture of talc and chlorite is composed of 50% by weight of talc and 50% by weight of chlorite.

11. Rubber mixture according to any of Claims 1 to 10, **characterized in that** the average particle diameter of the talc and/or of the chlorite is 5.2 µm.

12. Rubber mixture according to any of Claims 1 to 11, **characterized in that** it comprises at least 0.1 phr of at least one resin.

13. Rubber mixture according to any of Claims 1 to 12, **characterized in that** the quantitative proportion of other additives is from 2 to 150 phr.

14. Use of a rubber mixture according to any of Claims 1 to 13 for the production of a tyre.

15. Use of a rubber mixture according to Claim 14 for the production of the tread or of a body mixture of a tyre.

16. Use of a rubber mixture according to any of Claims 1 to 13 for the production of a belt, in particular of a conveyor belt, more particularly the non-load-bearing side thereof, and/or of a drive belt, in particular of a flat drive belt, V-belt, V-ribbed belt or toothed belt.

## Revendications

1. Mélange pour caoutchouc, **caractérisé par** la composition suivante :
- au moins un caoutchouc diène, et
- 0-120 parties par cent parties de silice amorphe et/ou de silice précipitée et
- 0,1-120 parties par cent parties d'au moins une suie et
- 5-50 parties par cent parties d'un mélange de charges composé de talc et de chlorite et
- 0-10 parties par cent parties d'au moins une résine et
- 2-200 parties par cent parties d'autres d'additifs.

2. Mélange pour caoutchouc selon la revendication 1, **caractérisé en ce qu'**il contient 5-80 parties par cent parties d'au moins un polyisoprène naturel ou synthétique.

3. Mélange pour caoutchouc selon l'une quelconque des revendications 1 à 2, **caractérisé en ce qu'**il contient 5-60 parties par cent parties d'au moins un caoutchouc de butadiène.

4. Mélange pour caoutchouc selon l'une quelconque des revendications 1 à 3, **caractérisé en ce qu'**il contient 5-50 parties par cent parties d'au moins un caoutchouc de styrènebutadiène.

5. Mélange pour caoutchouc selon l'une quelconque des revendications 1 à 4, **caractérisé en ce qu'**il contient au moins 0,1 partie par cent parties, en particulier au moins 0,5 partie par cent parties, de silice amorphe et/ou de silice précipitée.

6. Mélange pour caoutchouc selon l'une quelconque des revendications 1 à 5, **caractérisé en ce que** la quantité de suie est de 1-120 parties par cent parties.

7. Mélange pour caoutchouc selon l'une quelconque des revendications 1 à 6, **caractérisé en ce qu'**il contient 10-30 parties par cent parties d'un mélange de charges composé de talc et de chlorite.

8. Mélange pour caoutchouc selon l'une quelconque des revendications 1 à 7, **caractérisé en ce que** le mélange de charges composé de talc et de chlorite se compose de 40-60% en poids de talc et de 40-60% en poids de chlorite.

9. Mélange pour caoutchouc selon la revendication 8, **caractérisé en ce que** le mélange de charges composé de talc et de chlorite se compose de 45-55% en poids de talc et de 45-55% en poids de chlorite.

10. Mélange pour caoutchouc selon la revendication 9, **caractérisé en ce que** le mélange de charges composé de talc et de chlorite se compose de 50% en poids de talc et de 50% en poids de chlorite.

11. Mélange pour caoutchouc selon l'une quelconque des revendications 1 à 10, **caractérisé en ce que** le diamètre moyen des particules du talc et/ou du chlorite est de 5,2 µm.

12. Mélange pour caoutchouc selon l'une quelconque des revendications 1 à 11, **caractérisé en ce qu'**il contient au moins 0,1 partie par cent parties d'au moins une résine.

13. Mélange pour caoutchouc selon l'une quelconque des revendications 1 à 12, **caractérisé en ce que** la proportion en quantité d'autres additifs est de 2-150 parties par cent parties.

14. Utilisation d'un mélange pour caoutchouc selon l'une quelconque des revendications 1 à 13 pour la fabrication d'un pneu.

15. Utilisation d'un mélange pour caoutchouc selon la revendication 14 pour la fabrication de la bande de roulement ou d'un mélange de carcasse d'un pneu.

16. Utilisation d'un mélange pour caoutchouc selon l'une quelconque des revendications 1 à 13 pour la fabrication d'une bande, en particulier une bande de transport, ici en particulier sa face de roulement, et/ou d'une courroie, en particulier une courroie plate, une courroie trapézoïdale, une courroie striée ou une courroie dentée.
